# EUROPÄISCHE PATENTSCHRIFT

(11) **EP 2 816 688 B1**
(45) Veröffentlichungstag und Bekanntmachung des Hinweises auf die Patenterteilung: **15.03.2017**
(21) Anmeldenummer: 13305848.7
(22) Anmeldetag: 21.06.2013
(51) Int. Cl.: H02G 3/04

(54) **Schalkörper für Böden und Herstellungsverfahren für einen solchen Boden**
Formwork casing for floors and production method for such a floor
Dispositif de coffrage pour sols et procédé de fabrication d'un tel sol

(43) Veröffentlichungstag der Anmeldung: 24.12.2014
(73) Patentinhaber: Tehalit GmbH, 67716 Heltersberg (DE)
(72) Erfinder: Lettermann, Gert, 67688 Rodenbach (DE); Broschart, Peter, 76764 Rheinzabern (DE)
(74) Vertreter: Nuss, Laurent

(56) Entgegenhaltungen:
- EP-A1- 0 683 554
- EP-A2- 1 737 096
- AT-B- 348 609
- DE-U1- 29 912 368
- GB-A- 1 335 829
- US-A- 3 199 713
- US-A- 3 318 476
- US-A- 3 912 106

## Beschreibung

Die vorliegende Erfindung betrifft einen Schalkörper, auch Schalungskörper genannt, zum Aussparen von Nischen für den Einsatz von kastenförmigen Installationselementen, insbesondere von elektrischen Versorgungs- und/oder Verteilungseinheiten, beim Herstellen von Böden, insbesondere beim Vergießen von Beton zur Herstellung von Betonfußböden.

Sie betrifft auch ein Verfahren zur Herstellung von Böden, das einen erfindungsgemäßen Schalkörper verwendet.

Es sind bereits Schalungskörper und Verfahren bekannt, in denen steife, stabile und hohle kastenförmige Körper (z. B. aus Metall) ggf. samt Verkabelung einfach auf den Boden gelegt oder befestigt werden, bevor man mit Isolierungsmaterial und/oder Beton (Estrich) um den Kasten herum den Raum ausfüllt bis die gewünschte Höhe des Bodens oder Fußbodens erreicht wird.

Ein Schalkörper gemäß dem Oberbegriff des Anspruchs 1 ist zum Beispiel aus der US 3,912,106 bekannt.

Der dabei verwendete Körper, z. B. ein solider hohler Blechkasten, kann dann entweder entfernt oder im Boden gelassen werden bevor die elektrische Versorgungs- und/oder Verteilungseinheit, z. B. eine Abzweigdose, in der freigehaltenen Nische montiert und verkabelt wird. Diese Körper bzw. Verfahren sind aber in mehreren Punkten für den Montierarbeiter ungünstig, u. a. da: - für jede einzelne Form der elektrischen Versorgungs- und/oder Verteilungseinheit ein entsprechend passender Schalkörper benötigt wird was u. a. unpraktisch ist, höhere Kosten und mehr Raum für Herstellung, Lagerung und Transport des ganzen Schalkörpersortiments bedeutet, - die Höhe des Schalkörpers nicht einfach adaptierbar ist, - der Schalkörper in manchen Fällen zurück bleiben muss (Verlust) oder nur schwer entfernt werden kann, insbesondere wenn er zum Entfernen zerstört werden muss, - eine einfache, genaue und konstante Positionierung des Schalkörpers nicht ohne weiteres möglich ist, - ein praktischer und ggf. optimaler Zugang zu den losen Kabeln nicht immer gegeben ist,
- eine einfache Weiterverarbeitung, z. B. ein einfaches und schnelles Anschließen oder Verkabeln einer elektrischen Versorgungs- oder Verteilungseinheit in den meisten Fällen nicht realisierbar ist.

Es ist eine Aufgabe der Erfindung zumindest einige der vorgenannten Nachteile zu beheben.

Die Erfindung wird in den Hauptansprüchen definiert. Weitere vorteilhafte Merkmale werden in den Unteransprüchen angegeben.

Somit betrifft die Erfindung einen Schalkörper zur Herstellung von Böden, insbesondere Böden mit Estrich überdeckten Kabelkänalen, der dadurch gekennzeichnet ist, dass der Schalkörper aus einer zum Boden hin horizontal ausgerichteten Grundplatte mit einem äußeren im Wesentlichen viereckigen Umriss sowie aus einem vertikalen Zentrierelement und mindestens einem Schalkörpermodul besteht, wobei die Grundplatte mit einer Ausnehmung zum Anbringen des vertikalen Zentrierelements und von dem oder den den Schalkörper formenden Schalkörpermodul bzw. -modulen gebildet ist, wobei das vertikale Zentrierelement aus mindestens einer Wand besteht, die von der Ausnehmung der Grundplatte und dem Boden weg, vertikal, hoch herausragt und mit einer ausreichenden Dicke versehen ist um, entlang der Wand zwei entgegengesetzte seitliche, vertikale Kontaktflächen oder zwei Paar entgegengesetzte vertikal verlaufende Kontaktkanten zu bilden, die zum Aufstapeln oder Aufstecken des mindestens einen, ringartigen und horizontal ausgerichteten Schalkörpermoduls des zu bildenen Schalkörpers vorgesehen sind, wobei die Form, insbesondere die Form der seitlichen vertikalen Außenflächen, dieses ringartigen Schalkörpermoduls oder der aufeinandergestapelten bzw. aufgesteckten ringartigen Schalkörpermodule am Ende die Geometrie der äußeren Form und Höhe des gesamten gewünschten Schalkörpers definiert bzw. definieren, und wobei die Form der Ausnehmung in der Grundplatte und die Form des inneren Bereichs des ringartigen Schalkörpermoduls oder der ringartigen aufeinandergestapelten bzw. aufgesteckten Schalkörpermodule mindestens einen hohlen Durchgang bilden, der es ermöglicht Kabel oder Rohre unter der Grundplatte hindurch nach oben entlang dem inneren Hohlraum bzw. der inneren Hohlräume des ringartigen Schalkörpermoduls bzw. der ringartigen Schalkörpermodule bis zur gewünschten Höhe durchzuziehen.

Die vorliegende Erfindung betrifft auch ganz allgemein ein Verfahren zur Herstellung eines Bodens, insbesondere von Böden mit Estrich überdeckten Kabelkanälen, dadurch gekennzeichnet, dass mindestens ein erfindungsgemäßer Schalkörper verwendet, d. h. eingesetzt wird.

Insbesondere betrifft die vorliegende Erfindung ein Verfahren, das dadurch gekennzeichnet ist, dass auf dem Boden die Grundplatte des Schalkörpers horizontal angebracht wird,
- das Zentrierelement vertikal auf die Grundplatte angebracht wird,
- ein oder mehrere Schalkörpermodul/module auf das Zentrierelement aufgestapelt oder aufgesteckt werden bis die gewünschte Höhe und Form des zu formenden hohlen Schalkörpers erreicht ist,
- das Restvolumen außenseitig des gebildeten Schalkörpers bis zur gewünschten Höhe aufgefüllt wird,
- das Zentrierelement und ein Teil oder alle Schalkörpermodule entfernt werden.

Auf besonders vorteilhafterweise ist das erfindungsgemäße Verfahren noch dadurch gekennzeichnet, dass
- zuerst eine Zug- und Abzweigdose auf den Boden zumindest gelegt und am besten befestigt wird, wobei bereits mindestens ein Kabelkanal an die Zug- und Abzweigdose angeschlossen wird,
- auf eine standardmäßig vorhandene Öffnung in der horizontalen oberen Fläche der besagten Dose, die horizontale Grundplatte des Schalkörpers, zumindest zentriert und rutschfest aufgelegt am besten befestigt wird, wobei die besagte Öffnung von der besagten Grundplatte abgedeckt wird,
- das Zentrierelement vertikal auf die Grundplatte angebracht wird, wobei das Zentrierelement in die kleinere zentrierte Ausnehmung der Grundplatte vertikal passend eingesteckt und verrastet wird,
- die, aus dem oder den Kabelkanälen geführten Kabel oder Rohre von unten durch die Ausnehmung der Grundplatte vertikal entlang des Zentrierelements ggf. hochgezogen werden,
- ein oder mehrere ringartige Schalkörpermoduls/modulen, auf das Zentrierelement aufgestapelt oder aufgesteckt werden bis die gewünschte Höhe und Form des zu formenden Schalkörpers erreicht ist,
- das Restvolumen außenseitig des gebildeten Schalkörpers bis zur gewünschten Höhe des Bodens aufgefüllt wird,
- das Zentrierelement entfernt wird und ggf. die bereits vorhandenen Kabeln oder Rohre weiter hochgezogen und zum weiteren Verbau benützt werden, und
- die Schalkörpermodule nach oder beim Entfernen des Zentrierelements ganz oder teilweise entfernt werden.

Dank der erfindungsgemäßen Schalkörper bzw. der erfindungsgemäßen Verfahren kann für jede einzelne Form der benötigten Nische ein entsprechend passender Schalkörper einfach, billig und praktisch aufgebaut werden, dessen Höhe einfach adaptierbar ist, der ggf. auf einfacher Weise teilweise oder ganz entfernt (ggf. zerstört) werden kann, der immer eine genaue und konstante Positionierung oder Ausrichtung besitzt, ggf. einen praktischen und sogar optimalen Zugang zu den Kabeln gewährleisten kann und, falls notwendig eine einfache Weiterverarbeitung, z. B. ein einfaches und schnelles Anschließen oder Verkabeln einer elektrischen Versorgungs- oder Verteilungseinheit oder eines ähnlichen bzw. analogen Apparates, insbesondere beim Anschluss von Rohren oder Leitungen im Allgemeinen z. B. bei Rohren in einem Heizungs- oder Klimatisierungssystems, von optischen Kabeln zur Datenübertragung, von Rohren für Gase oder Flüssigkeiten, z. B. Beispiel bei einer Versorgung in einem Krankenhaus (Sauerstoff, Stickstoff, Wasser...) oder Werkstatt (Druckluft, Öl, Kraftstoff...), usw.

Die Montage, insbesondere der elektrischen Versorgungseinheiten inkl. Verkabelung in den, z. B. mit Estrich, aufgefüllten Boden kann passgenau und problemlos auf einfacherer Weise vom Arbeiter ausgeführt werden.

Die Erfindung wird nun an Hand von Ausführungsbeispielen näher erläutert, die nicht einschränkenden Beispielen darstellen, dies im Zusammenhang mit den anliegenden folgenden schematischen Figuren.

Es zeigen:
Fig. 1 eine seitliche Ansicht eines installierten erfindungsgemäßen Schalkörpers;
Fig. 2 ein von oben gesehen horizontaler Schnitt entlang der Achse B-B der Fig. 1;
Fig. 3a eine perspektivische Ansicht einer Ausführungsform der Teile eines erfindungsgemäßen Zentrierelements und Grundplatte vor der Montage;
Fig. 3b ein vergrößerter Ausschnitt eines Teiles X der Fig. 3a;
Fig. 4 eine perspektivische Ansicht einer Ausführungsform des erfindungsgemäßen Zentrierelements von Fig. 3a nach dessen Montage und die dazu passende Grundplatte;
Fig. 5 eine Seitenansicht der drei Elementen aus den Figuren 3a und 4;
Fig. 6a-6h perspektivische Ansichten zur Erläuterung des erfindungsgemäßen Verfahrens zur Herstellung eines Schalkörpers und eines Bodens in dem eine elektrische Versorgungseinheit eingelassen wurde.

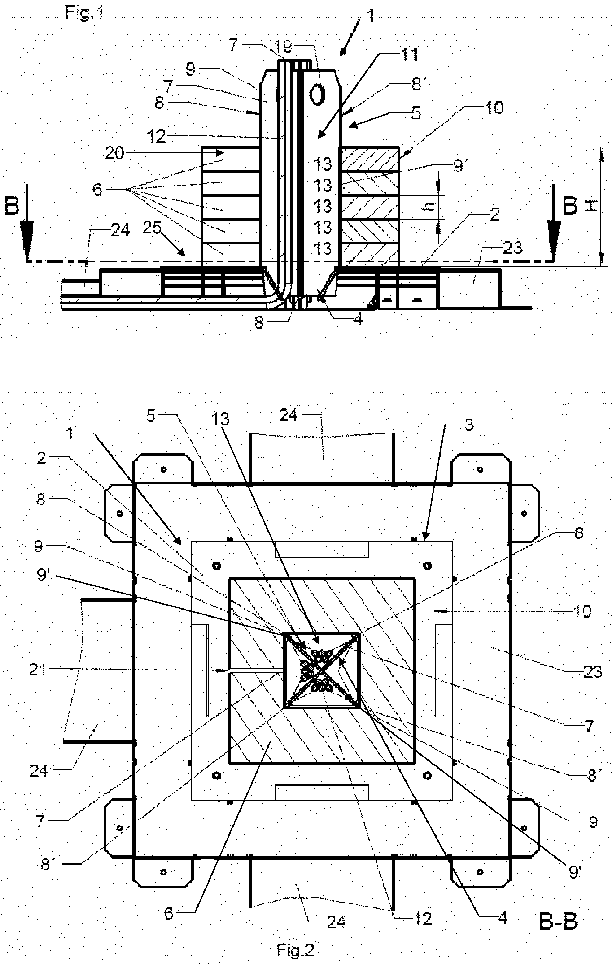

Wie in den Figuren 1 und 2 vereinfacht illustriert, betrifft die vorliegende Erfindung einen Schalkörper 1 zur Herstellung von Böden, insbesondere Böden mit Estrich überdeckten Kabelkänalen, dadurch gekennzeichnet, dass der Schalkörper 1 bestehend aus einer zum Boden hin horizontal ausgerichteten Grundplatte 2, vorzugsweise mit einem äußeren im Wesentlichen viereckigen Umriss 3, noch bevorzugter mit einem quadratischen Umriss 3, und mit einer, vorzugsweise zentral zur Grundplatte 2 positionierten Ausnehmung 4 zum Anbringen eines vertikalen Zentrierelements 5 von einem oder mehreren, den Schalkörper 1 formenden Schalkörpermodul bzw. -modulen 6, gebildet ist wobei das vertikale Zentrierelement 5 aus mindestens einer Wand 7 besteht, die von der Ausnehmung 4 der Grundplatte 2 und dem Boden weg, vertikal, hoch herausragt und mit einer ausreichenden Dicke versehen ist um, entlang der Wand 7 zwei entgegengesetzte seitliche, vertikale Kontaktflächen 8, 8' oder zwei Paar entgegengesetzte vertikal verlaufende Kontaktkanten 9, 9' zu bilden, die zum Aufstapeln oder Aufstecken des mindestens einen, ringartigen und horizontal ausgerichteten Schalkörpermoduls 6 des zu bildenen Schalkörpers 1 vorgesehen sind, wobei die Form, insbesondere die Form der seitlichen vertikalen Außenflächen 10, dieses ringartigen Schalkörpermoduls 6 oder der aufeinandergestapelten bzw. aufgesteckten ringartigen Schalkörpermodule 6 letztendlich die Geometrie der Form, insbesondere der äußeren Form und Höhe H, des gesamten gewünschten Schalkörpers 1 definiert bzw. definieren, und wobei die Form der Ausnehmung 4 in der Grundplatte 2 und die Form des inneren Bereichs des ringartigen Schalkörpermoduls 6 oder der ringartigen aufeinandergestapelten bzw. aufgesteckten Schalkörpermodule 6 mindestens einen hohlen Durchgang 11 bilden, der es ermöglicht Kabel oder Rohre 12 unter der Grundplatte 2 hindurch nach oben entlang dem inneren Hohlraum 13 bzw. der inneren Hohlräume 13 des ringartigen Schalkörpermoduls 6 bzw. der ringartigen Schalkörpermodule 6 bis zur gewünschten Höhe durchzuziehen.

Die Fig. 1 zeigt ein besonders bevorzugtes Beispiel eines erfindungsgemäßen Schalkörper 1, der aus verschiedenen Teilen besteht, die nun einzeln und mehr im Detail beschrieben werden.

Im Wesentlichen besteht der besagte Schalkörper 1 aus einer zum Boden hin horizontal ausgerichteten Grundplatte 2, vorzugsweise mit einem äußeren im Wesentlichen viereckigen Umriss 3, noch bevorzugter mit einem quadratischen Umriss 3 wie hier dargestellt. Andere Formen sind ebenfalls möglich solange sie genügend Fläche bieten damit der darauf aufgebaute Schalkörper 1 ausreichend Platz hat.

Die Grundplatte 2 kann aus jedem zweckmäßigen Material hergestellt werden, vorzugsweise aus einem zweckmäßigen steifen Karton, Pappe o. ä., insbesondere Wellkarton oder gewelltem Kunststofflaminat, die ausreichend dick und steif sind und sich schnell und einfach bearbeiten lassen. Die Grundplatte 2 kann dann einfach praktisch aus dem Rohmaterial ausgeschnitten werden, was auch die Herstellung der Ausnehmung 4 erleichtert. Wie z. B. auf der Figur 2 angedeutet, können an jeder Seite der Grundplatte 2 und/oder in deren Ecken, Mittel (Bohrungen, faltbare Laschen, Clipvorrichtungen) vorgesehen werden, die es ermöglichen, bzw. erleichtern die Grundplatte 2 auf den Boden oder eine Basis, z. B. in der Form einer Zug- und Abzweigdose 23 wie hier im Beispiel, genau zu positionieren, anzubringen und/oder dort festzuhalten.

Vorzugsweise zentral zur Grundplatte 2, d. h. im Allgemeinen am Schwergewichtspunkt, wird in der Grundplatte 2 eine Ausnehmung 4 geschaffen zum Anbringen eines vertikalen Zentrierelements 5 von einem oder mehreren, den Schalkörper 1 formenden Schalkörpermodule 6.

In der Regel werden symmetrische Teile stark bevorzugt. Insbesondere hat die Grundplatte 2 meistens die Grundform eines Kreises, Ovals, Rechtecks oder Quadrats. Das Zentrum der Grundplatte 2 ist dann einfach zu Bestimmen und dort kann z. B. eine viereckige Ausnehmung 4 ganz oder teilweise ausgeschnitten werden, die es durch die Dicke der Grundplatte 2 ermöglicht eine Fläche zu bilden, die es erlaubt das vertikale Zentrierelement 5 festzuhalten.

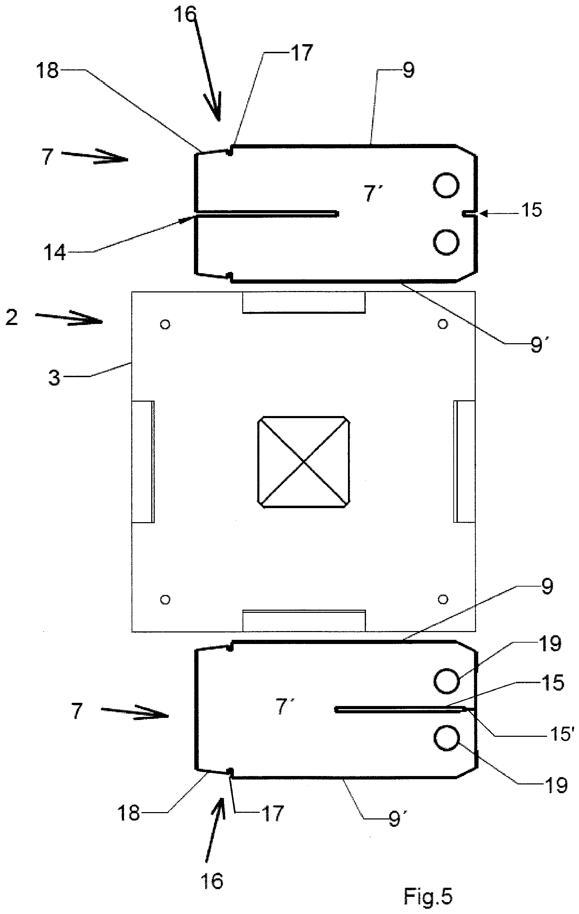

Erfindungsgemäß ist die zentral angebrachte Ausnehmung 4 in der Grundplatte 2 viereckig oder quadratisch, ggf. mit abgeschrägten Ecken (siehe z. B. Figur 5).

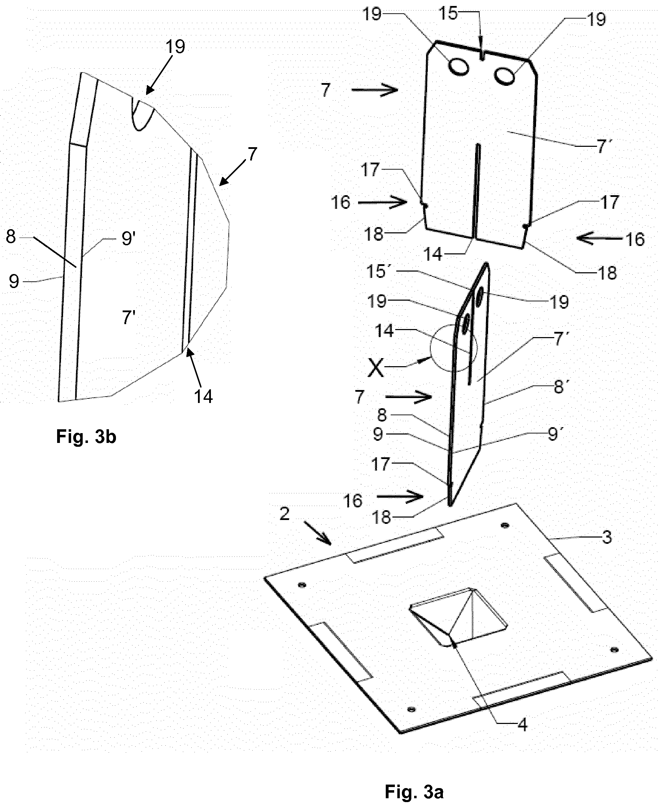

In dieser vorteilhaften dargestellten Ausführung wird z. B. in der Mitte bei der Kreuzung der Diagonalen der Grundplatte 2 eine quadratische Ausnehmung 4 geschaffen indem man entlang dieser Diagonalen zwei gerade Schnitte ausführt die die Grundplatte 2 dort völlig durchschneiden. Es entsteht somit ein kreuzförmiger Ausschnitt bei dem man die vier dreieckigen Teile zum Boden hin zurückfalten kann (bzw. ganz oder teilweise abschneiden kann) und die eine quadratische oder im Wesentlichen quadratische, insbesondere symmetrisch zentrierte Ausnehmung 4 in der Grundplatte 2 bilden. Die vier gerade Seiten der Ausnehmung 4 sind hier parallel zu den vier Seiten des Umrisses 3 der Grundplatte 2. Vorteilhafter ist es noch wenn am jeweiligen Ende der zwei sich kreuzenden Schnittlinien durch die Grundplatte 2 noch ein kleiner rechwinklig zur Schnittlinie symmetrischer Querschnitt ausgeführt wird. Es entsteht dann eine quadratförmige Ausnehmung 4 deren vier Ecken entsprechend abgekantet sind und dort bevorzugte Stellen für die Flächen bilden, die das Zentrierelement 5 aufnehmen und halten können. Die Figuren 3a, 3b, 4 und 5 zeigen ein Beispiel einer solchen Grundplatte 2 sowie ein Ausführungsbeispiel für die Wände 7 als Platten 7' für das Zentrierelement 5.

Alle anderen Varianten in der Form oder Beschaffenheit der Grundplatte 2 und Ausnehmung 4 sind möglich solange sie es dem Fachmann ermöglichen das vertikale Zentrierelement 5 in der gewünschten definierten Position anzubringen und stabil festzuhalten damit es das Schalkörpermodul 6 oder die Schalkörpermodule 6 aufnehmen kann und der Schalkörper 1 an der richtigen Stelle und/oder in der benötigen Ausrichtung (bei einer nicht zylindrischen runden Form) am Bauplatz angebracht werden kann.

Anstatt der Diagonalen kann man, z. B. die zwei sich bei 90° kreuzende Mittellinien aus der Mitte zwei sich folgenden Seiten eines quadratischen Umrisses 3 nehmen. Die entsprechend gebildete Ausnehmung 4 ist dann im Vergleich zu dem ersten Beispiel um 45° versetzt.

Es ist vorteilhaft wenn das vertikale Zentrierelement 5 aus mindestens einer Wand 7 besteht, die von der Ausnehmung 4 der Grundplatte 2 und dem Boden weg, vertikal, hoch herausragt und mit einer ausreichenden Dicke versehen ist um, entlang der Wand 7 zwei entgegengesetzte seitliche, vertikale Kontaktflächen 8, 8' oder zwei Paar entgegengesetzte vertikal verlaufende Kontaktkanten 9, 9' zu bilden, die zum Aufstapeln oder Aufstecken des mindestens einen, ringartigen und horizontal ausgerichteten Schalkörpermoduls 6 des zu bildenen Schalkörpers 1 vorgesehen sind. Diese vertikale Kontaktflächen 8, 8' oder zwei Paar entgegengesetzte vertikal verlaufende Kontaktkanten 9, 9' besonders auf dem Detail der Figur 3b zu erkennen. Bei einer Wand 7 sind somit zwei vertikale Kontaktflächen 8, 8' und/oder vier vertikal verlaufende Kontaktkanten 9, 9' möglich welche mit den Schalkörpermodulen 6 zusammenwirken. Je nach der Geometrie oder Form des inneren Ringes des Schalkörpermoduls 6 oder der Schalkörpermodule 6 besteht ein Kontakt mit den Kontaktflächen 8, 8' und/oder den Kontaktflächen 8, 8' und/oder vier vertikal verlaufende Kontaktkanten 9, 9'. Bei einem quadratischen Innenring und eine ausreichend dicke Wand 7 in der Diagonale findet der Kontakt zwischen den Schalkörpermodul 6 und der Platte 7' der Wand 7 entlang den vier vertikalen Kontaktkanten 9, 9' statt. Wenn die Platte 7' am oberen und/oder unteren Ende abgeschrägt ist findet an diesen Stellen der besagten Kontaktkanten 9, 9' jedoch ausnahmsweise kein Kontakt mit den Schalkörpermodulen 6 statt. Es reicht lediglich wenn die Wand 7 oder Wände 7 so ausgeführt sind, dass sie ausreichend stabil sind und die relativ leichten Schalkörpermodulen 6 vertikal aufnehmen und führen können, so dass ein Schalkörper 1 entstehen kann. Bei u. a. einem ausreichenden flächigen Kontakt entlang den Kontaktflächen 8, 8' oder bei drei- oder viereckigen Innenringen der Schalkörpermodule 6 werden diese sogar auf vorteilhafter Weise in der waagrechten Rotation blockiert. Die aufgelegten Schalkörpermodule 6 und der Schalkörper 1 sind somit immer richtig ausgerichtet.

Wie die Grundplatte 2 kann eine solche Wand 7 ebenfalls aus Karton, Wellkarton, Kunststofflaminat o. ä. hergestellt werden.

In der einfachsten Ausführung wird die Wand 7 einfach auf Größe/Form der Ausnehmung 4 abgestimmt damit sie dort eingeführt und am besten von selbst hält und vertikal stehen bleibt. Dazu kann sich die Wand 7 auf den Boden stützen und/oder mit den Kontaktflächen in der Dicke der Ausnehmung 4 zusammenwirken. Zusätzliche Mittel oder Maßnahmen zur mechanischen Befestigung sind auch möglich (Einrasten, Verkleben, Abstützen...). Eine besonders bevorzugte Ausführungsform wird später beschrieben.

Wie auf den Figuren 1 und 2 erkennbar bestimmt die Form, insbesondere die Form der seitlichen vertikalen Außenflächen 10, des oder der ringartigen Schalkörpermodule 6 die Geometrie der Form, insbesondere der äußeren Form und Höhe H, des gesamten gewünschten Schalkörpers 1.

Die Form der Ausnehmung 4 in der Grundplatte 2 und die Form des inneren Bereichs des ringartigen Schalkörpermoduls 6 oder der ringartigen aufeinandergestapelten bzw. aufgesteckten Schalkörpermodule 6 sind so aufeinander abgestimmt, dass mindestens ein hohler Durchgang 11 gebildet wird, der es ermöglicht Kabel oder Rohre 12 unter der Grundplatte 2 hindurch nach oben entlang dem inneren Hohlraum 13 bzw. der inneren Hohlräume 13 des ringartigen Schalkörpermoduls 6 bzw. der ringartigen Schalkörpermodule 6 bis zur gewünschten Höhe durchzuziehen.

In dem vorgenannten Beispiel ist für eine, von oben gesehen, quadratische oder im Wesentlichen quadratische Ausnehmung 4 der Grundplatte 2 eine entsprechende quadratische oder im Wesentlichen quadratische Form des horizontalen Querschnittes des hohlen inneren Bereichs der Schalkörpermodule 6 zweckmäßig. Die Ringe der bevorzugten Ausführungsform werden später genauer beschrieben.

Es ist vorteilhaft wenn das vertikale Zentrierelement 5 aus mindestens zwei, in der Mitte sich kreuzenden Wänden 7 besteht. Dies erzeugt eine besonders stabile und einfache Lösung.

Noch vorteilhafter ist es wenn die Wände 7 aus zwei kreuzförmig ineinander einsteckbaren, im Wesentlichen viereckigen, Platten 7' bestehen, die in der Mitte ihrer Breite dazu entsprechende, parallel zur ihrer Länge, längsläufige Rillenauschnitte 14 bzw. Rillenausnehmungen 15 aufweisen (s. Fig. 3a, 4 und 5).

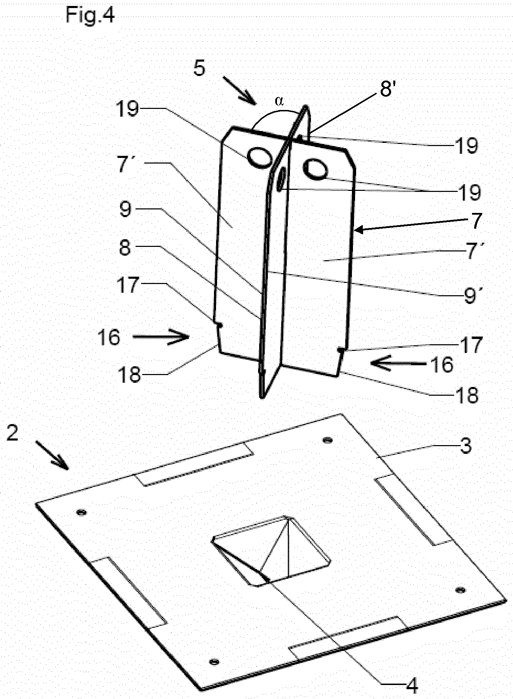

Die Rillenausschnitte 14 bzw. Rillenausnehmungen 15 sind so dimensioniert und platziert (z. B. einige mm Breite und ca. die halbe Länge der Platte 7' für den Rillenausschnitt; die gleiche Breite und einige cm Länge für die Rillenausnehmung 15), dass sie ein möglichst stabiles Kreuz nach der Montage ergeben. Die Dicke oder Stärke der Platte 7' beträgt in der Regel ebenfalls ein paar mm. Die Rillenausnehmung 15 der ersten Platte 7' wirkt mit einem Schlitz 15', der am Ende des Rillenausschnitte 14 der anderen Platte 7' vorgesehen ist (s. Fig. 5) zusammen und ermöglicht auf optimaler Weise eine bessere Stabilität des gebildeten Kreuzes zwischen den Platten 7'. Der Winkel alpha zwischen den Platten 7' beträgt somit 90° und lässt weniger Spieltraum zu als ohne diese bevorzugte Maßnahme (s. Figuren 4 und 5).

Dank dieser Konstruktion kann der Fachmann auf einfacher, praktischer und kostengünstiger Weise ein Zentrierelement 5 zusammenbauen. Die besagten Platten 7' sind vorzugsweise aus demselben Material wie jenes das für die Grundplatte 2 und Wände 7 erwähnt wurde.

In einer bevorzugten Ausführungsform sind, wie bereits oben in Erwägung gezogen, insbesondere im Bereich des unteren, bodennahen Ende der Wand oder Wände 7, am Rand, Mittel 16 vorgesehen zur deren mechanischen Befestigung am Rand der Ausnehmung 4 der Grundplatte 2, insbesondere Mittel 16, wie lokale eckige Aussparungen 17 und Zuspitzungen 18 der Wandenden, die mit der Fläche der dort vorhandenen Dicke in der Ausnehmung 4 zusammenwirken um diese Wände 7 durch die Ausnehmung 4 teilweise hindurchzuführen und dort einzurasten.

Die Figuren 3a und 4 zeigen jeweils zwei Platten 7' mit solchen beispielhaften Maßnahmen.

Vorteilhaft ist es auch wenn im Bereich des oberen, von der Grundplatte und Boden entfernten Endes der Wand oder Wände 7, mindestens ein Loch 19, insbesondere zwei symmetrisch zu der vertikalen Längsachse der Wände angeordneten Löcher 19 vorhanden ist/sind.

Damit lassen sich die Platten 7' problemlos handhaben und insbesondere erleichtern sie ein Herausziehen des vorgenannten montierten Kreuzes am Ende des Verfahrens, das später erläutert wird. Sie erlauben es auch eventuell aufrecht stehende Kabel oder Rohre 12 zwischenzeitlich aufzunehmen oder mittels einer üblichen Befestigung (Klammer, Klebeband,...) in der Höhe zu lagern.

Weiterhin ist der Schalkörper 1 nach vorliegender Erfindung dadurch gekennzeichnet, dass mindestens ein Schalkörpermodul 6 ein, innen hohler, aus geraden Balkenabschnitte 20 konstanter Dicke gebildeter Ring besteht, dessen äußere Form und Maße, die des gewünschten Schalkörpers 1 entsprechen, ggf. ausgenommen der Höhe h, die bei mehreren Schalkörpermodulen dann nur ein Bruchteil der Gesamthöhe H des ganzen Schalkörpers 1 beträgt, und dessen innere Form und Maße, so gewählt sind, dass der innere viereckige, vorzugsweise quadratischer, Ring auf das vertikale Zentrierelement 5 justiert aufgezogen werden kann.

Wie man es aus Figur 1 und 2 entnehmen kann, besteht z. B. der erfindungsgemäße Schalkörper 1 aus fünf identischen aufeinander gestapelten Schalkörpermodulen 6. Jedes Modul besteht aus einem, innen hohlen, aus geraden Balkenabschnitte 20 konstanter Dicke gebildeten Ring, dessen äußere Form und Maße, die des gewünschten Schalkörpers 1 entsprechen, wobei die Höhe H Schalkörpers 1, die 5-fache Höhe eines einzelnen Schalkörpermoduls 6 der Höhe h beträgt. Von den Seiten gesehen sind die Balkenabschnitte 20 rechteckig. Der Querschnitt der Balkenabschnitte 20 ist vorzugweise quadratisch. Von oben gesehen hat der somit gebildete Ring vorzugsweise eine quadratische Form mit einem quadratischen inneren Loch oder Hohlraum 13, d. h. alle vier Balkenabschnitte 20 haben die gleiche Länge.

Gemäß einem weiteren Merkmal, sind die innere Form und Maße des Schalkörpermoduls 6, so gewählt, dass der innere viereckige, vorzugsweise quadratische, Ring auf das vertikale Zentrierelement 5 justiert herunter gelassen werden kann, d. h. es besteht ein gleitender Kontakt zwischen den Kontaktkanten 9, 9' und/oder Kontaktflächen 8, 8' der Wand/Wände 7 des Zentrierelements 5 und den entsprechenden vertikalen Flächen im inneren des Ringes des/der Schalkörpermoduls/e 6, so dass eine leichte Reibung und Führung entlang dem vertikalen Zentrierelements 5 stattfinden kann.

Selbstverständlich brauchen nicht alle Schalkörpermodule 6 identisch zu sein. Die modulare Bauweise ermöglicht es jede beliebige nutzvolle Form (Geometrie und Größe) eines Schalkörper 1 nachzubauen indem die passenden äußeren Parameter des Schalkörpermoduls 6 gewählt werden. Die inneren Maße und Form oder Ausgestaltung des inneren Ringes müssen nur mit denen des Zentrierelements 5 kompatibel sein damit der Aufbau möglich ist und mindestens ein Durchgang 11 für die Kabel oder Rohre 12 bestehen bleibt. In der Figur 2 erkennt man, z. B. dass in dem genannten Beispiel vier Durchgänge 11 möglich sind (drei davon sind hier mit jeweils fünf Kabeln 12 belegt die durch die drei Kabelkanäle 24 herbeigebracht werden).

Die Schalkörpermodule 6 sind dort alle, von oben gesehen, gerade quadratische Ringe mit jeweils einem inneren quadratischen Hohlraum 13. Die vertikale Höhe h eines Schalkörpermoduls 6 beträgt ein Bruchteil der gewünschten Gesamthöhe H des gesamten Schalkörpers 1. Die oberen und unteren Flächen der Schalkörpermoduls 6 sind vorzugsweise horizontal und eben. Sie können ggf. (nicht dargestellte) Mittel aufweisen, die eine Verbindung der Schalkörpermoduls 6 untereinander ermöglichen (Aufsteckelemente, Verkleben der vertikal benachbarten horizontalen Flächen, Vernagelung, usw.). Es entsteht dann progressiv ein massiver einteiliger oder mehrteiliger Block als Schalkörper 1.

Alternativ kann auch direkt ein solcher einteiliger Block vorgesehen werden, der aus nur einem entsprechenden Schalkörpermodul 6 besteht und der dann gleich alle gewünschten/notwendigen Formen und Dimensionen, insbesondere die zweckmäßige Höhe H besitzt.

Der erfindungsgemäße Schalkörper 1 ist noch dadurch gekennzeichnet, dass mindestens ein Schalkörpermodul 6, vorzugsweise alle aufeinandergestapelten bzw. aufgesteckten Schalkörpermodule 6 eine, vertikal betrachtet, äußere kreisförmige runde, viereckige oder quadratische ringartige Form aufweisen.

Dies ermöglicht es praktisch alle in der Praxis benutzten Formen für den Schalkörper 1 bereitzustellen.

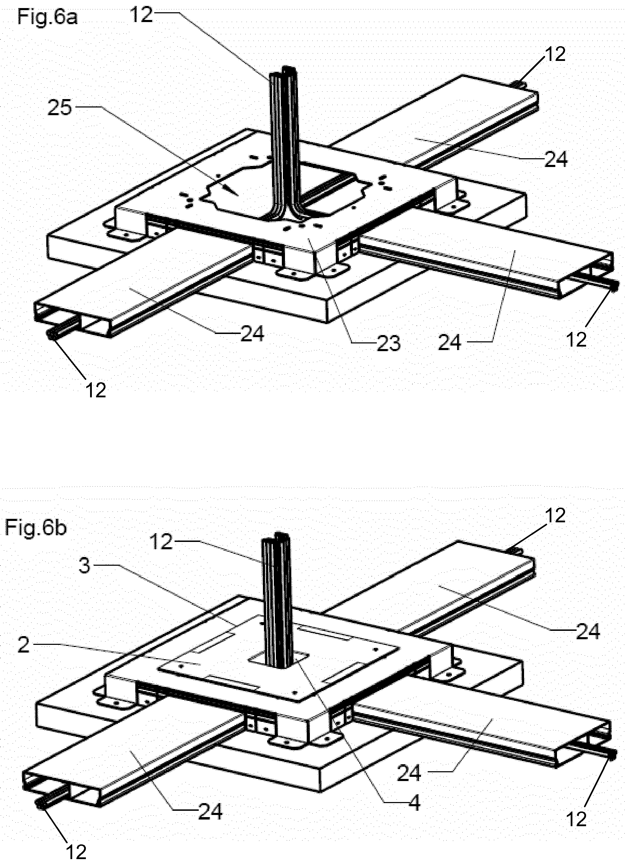

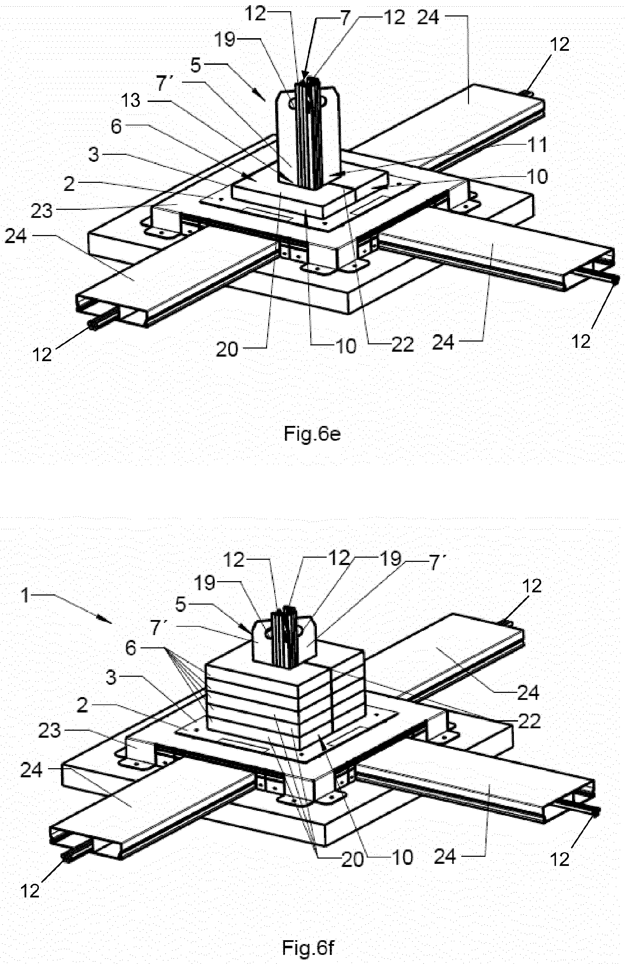

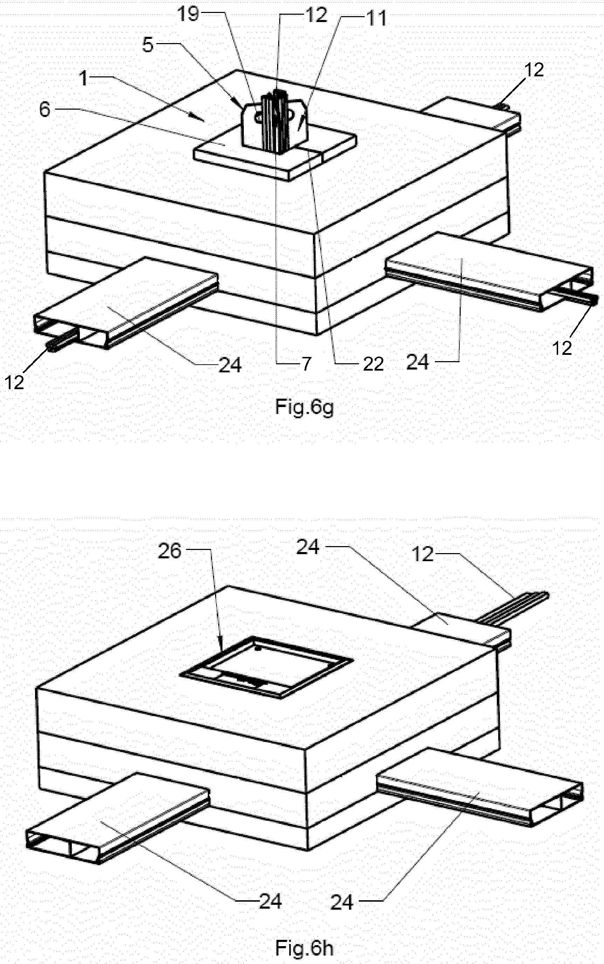

Es ist ebenfalls vorteilhaft wenn mindestens ein Schalkörpermodul 6, vorzugsweise alle, einen durchgehenden Spalt 21 (Fig. 1) oder Schnitt 22 (Fig. 6e, 6f und 6g) vorweist bzw. vorweisen, der ein Balkenabschnitt 20 des Ringes auf der gesamten Höhe h von innen nach außen durchschneidet oder unterbricht. Dies erlaubt u. a. mehr Spiel bei der Montage bzw. Demontage. Als beispielhafte Breite des Spaltes 21 kommen in der Regel einige mm in Frage damit insbesondere der flüssige Estrich nicht oder so wenig wie möglich in den offenen Durchgang 11 dringt.

Vorzugsweise ist der Schalkörper 1 auch dadurch gekennzeichnet, dass er aus einer Aufstapelung bzw. Aufsteckung von 2 bis 15, ggf. identischen, jeweils 2cm bis 10cm hohen ringartigen Schalkörpermodule 6 gebildet ist, die aus einem leicht zerschneidbarem Kunststoffmaterial, vorzugsweise einem expandiertem Kunststoff wie Styropor (ges. Warenzeichen) oder festem Polyurethanschaum bestehen.

Andere ähnliche Materialien wie sind ebenfalls möglich so lange die notwendige Stabilität oder Festigkeit gesichert ist und sie, bevorzugter Weise per Hand, mit einer Schere oder einem Teppichmesser, usw. zerschneidet werden können.

Die vorliegenden Erfindung erstreckt sich auch auf ein Verfahren zur Herstellung eines Bodens, insbesondere von Böden mit Estrich überdeckten Kabelkanälen, das dadurch gekennzeichnet ist, dass mindestens ein erfindungsgemäßer Schalkörper 1 verwendet wird.

Insbesondere ist das erfindungsgemäße Verfahren dadurch gekennzeichnet, dass auf dem Boden die Grundplatte 2 des Schalkörpers 1 horizontal angebracht wird,
- das Zentrierelement 5 vertikal auf die Grundplatte 2 angebracht wird,
- ein oder mehrere Schalkörpermodul/module 6 auf das Zentrierelement 5 aufgestapelt oder aufgesteckt werden bis die gewünschte Höhe H und Form des zu formenden hohlen Schalkörpers 1 erreicht ist,
- das Restvolumen außenseitig des gebildeten Schalkörpers 1 bis zur gewünschten Höhe aufgefüllt wird, und
- das Zentrierelement 5 und ein Teil oder alle Schalkörpermodule 6 entfernt werden.

Wenn die Grundplatte 2 direkt auf den Boden befestigt wird sollte ein bestimmter Zwischenraum zwischen Boden und Grundplatte 2 vorhanden sein damit genügend Platz für die Kabel oder Rohre 12 bleibt, so dass sie problemlos unter die Grundplatte 2 durch die Ausnehmung 4 geführt werden können. Wenn es sich um relative dünne Kabel 12, z. B. gebräuchliche elektrische Kabel mit einem runden oder platten Querschnitt von einigen mm handelt, kann die aus Kunststoff oder Karton bestehende Grundplatte 2 dank ihrer eigenen Flexibilität direkt auf die Kabel 12 gelegt und mit Schrauben, Klebstoff o. ä. am Boden befestigt werden.

Eine vorteilhafte bevorzugte Variante sieht vor, dass die Kabel oder Rohre 12, insbesondere bei größeren Durchmessern (mehrere cm) und/oder Zerquetschungs- bzw. Erhitzungsgefahr (bei hohlen Rohrleitungen bzw. bei elektrischen Kabeln mit hoher Amperezahl) in einem oder mehreren adaptierten Kabelkanäle 24 bis zu einer Zug- und Abzweigdose 23 zur Grundplatte 2 geführt werden. Diese zwei Elemente sind u. a. auf Figur 1 und 2 zu erkennen.

Das erfindungsgemäße Verfahren ist auch dadurch gekennzeichnet, dass zuerst eine Zug- und Abzweigdose 23 auf den Boden zumindest gelegt und am besten befestigt wird, wobei bereits mindestens ein Kabelkanal 24 an die Zug- und Abzweigdose 23 angeschlossen wird, auf eine standardmäßig vorhandene Öffnung 25 in der horizontalen oberen Fläche der besagten Dose 23, die horizontale Grundplatte 2 des Schalkörpers 1, zumindest zentriert und rutschfest aufgelegt am besten befestigt wird, wobei die besagte Öffnung 25 von der besagten Grundplatte 2 komplett abgedeckt wird, das Zentrierelement 5 vertikal auf die Grundplatte 2 angebracht wird, wobei das Zentrierelement 5 in die kleinere zentrierte Ausnehmung 4 der Grundplatte 2 vertikal passend eingesteckt und verrastet wird, die, aus dem oder den Kabelkanälen 24 geführten Kabel 12 von unten durch die Ausnehmung 4 der Grundplatte 2 vertikal entlang des Zentrierelements 5 ggf. hochgezogen werden, ein oder mehrere ringartige Schalkörpermoduls/modulen 6, auf das Zentrierelement 5 aufgestapelt oder aufgesteckt werden bis die gewünschte Höhe H und Form des zu formenden Schalkörpers 1 erreicht ist, das Restvolumen außenseitig des gebildeten Schalkörpers 1 bis zur gewünschten Höhe des Bodens aufgefüllt wird, das Zentrierelement 5 entfernt wird und ggf. die bereits vorhandenen Kabeln 12 weiter hochgezogen und zum weiteren Verbau benützt werden, und die Schalkörpermodule 6 nach oder beim Entfernen des Zentrierelements 5 ganz oder teilweise entfernt werden.

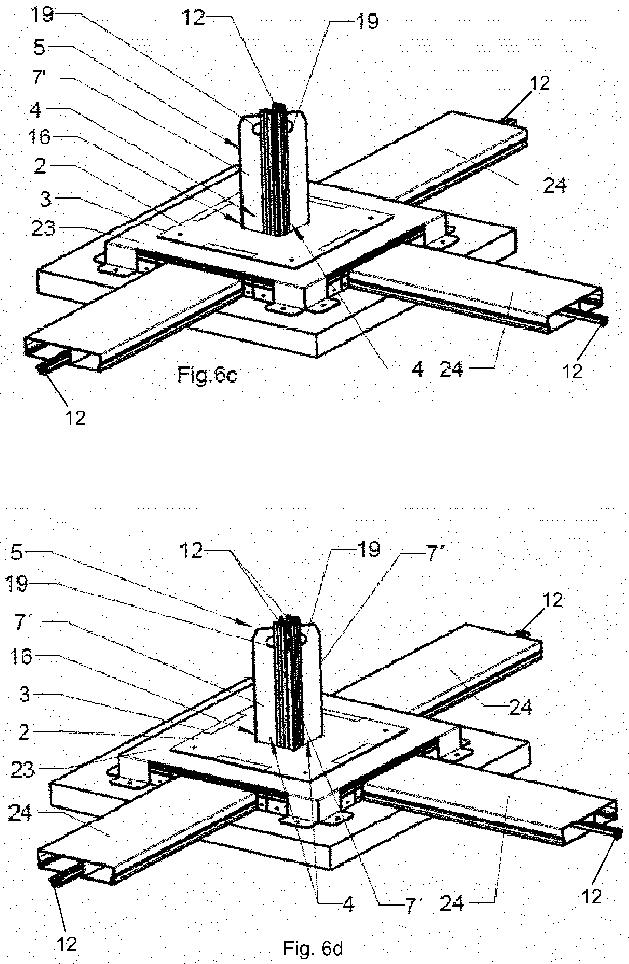

Dieses Verfahren wird vereinfacht auf den Figuren 6a-6g dargestellt, wobei in diesem nicht einschränkenden Beispiel drei Kabelkanäle 24 vereinfacht dargestellt wurden. In der Figur 6c wird eine Ausführungsform mit einer einzigen Wand 7 (Platte 7') für das Zentrierelement 5 gezeigt, während auf der Figur 6d eine Ausführungsform mit zwei sich kreuzenden Wänden 7 (Platten 7' - s. Figur 3a und 4) als Beispiel repräsentiert wurde. In diesem Fall entstehen später vier Durchgänge 11, davon drei mit Kabeln 12 bestückt (s. Fig. 6e) anstatt zwei Durchgänge bei einer einzigen Wand 7.

Bei Verwendung eines Zentrierelements 5 nach den Figuren 3a und 4 wird es in einer (nicht abgebildeten) Zwischenetappe zuerst aus den zwei Platten 7' durch einfaches manuelles Ineinander- stecken oder schieben vorbereitet und in Kreuzform gebracht und dann dank der Mittel 16 einfach in die Ausnehmung 4 der Grundplatte 2 eingesteckt und dort dank der vier seitlichen Aussparungen 17 vorläufig festgehalten.

Die ringförmigen Schalkörpermodule 6 werden dann nacheinander auf das Zentrierelement aufgesteckt bis die gewünschte Höhe H erreicht ist. Die inneren Hohlräume 13 der Schalkörpermodule 6 jenseits der Platten 7' ermöglichen es dabei mindestens einen Durchgang 11 für die Kabel oder Rohre 12 freizulassen. Diese letzteren können während des Aufbaus des Schalkörpers 1 ggf. nach und nach, nach oben mitgezogen werden damit sie später für die weitere Verwendung oder Lagerung griffbereit sind (s. Figuren 6e-6g).

Ist der gewünschte Schalkörper 1 nun geformt, kann der Boden fertig gestellt werden, indem über die Zug- und Abzweigdose 23 und die Kabelkanäle 24 weitere Schichten z. B. Schall- Trittisolierungsschichten um den Schalkörper 1 herum gelegt werden bzw. Beton gegossen wird. Dies wurde auf Figur 6g und 6h schematisch angedeutet. Mann sieht wie der Schalkörper 1 von Schichten umgeben wird, die den teilweise gezeichneten Boden formen. Das Auffüllen um den Schalkörper 1 wurde in dem gezeigten Beispiel auf Fig. 6g nicht ganz bis zur gleichen Höhe des letzten Schalkörpermoduls 6 ausgeführt. Dies ermöglicht ein leichteres Entfernen des höchstgelegenen Schalkörpermoduls 6 und vermindert das Risiko, dass eventuell Estrich/Beton aus Versehen in die Durchgänge 11 gelangt.

Wenn die gewünschte Endhöhe erreicht ist und/oder der Beton genügend ausgehärtet ist, kann dann der Schalkörper 1 teilweise oder ganz entfernt werden, indem ein, mehrere oder alle Schalkörpermodule 6 entfernt werden. Die Löcher 19 in den Platten 7' können dabei vorteilhaft als Griffe benutzt werden um zumindest das Zentrierelement 5 leichter herauszuziehen. Dieser Schritt wurde nicht auf den Figuren dargestellt.

Ein weiterer Vorteil besteht darin, dass im erfindungsgemäßen Verfahren das oder die ringartig ausgebildete(n) Schalkörpermodul(en) 6 durch Zerbrechen der, in dessen/deren Querschnitt vorhandenen, durchgehende Spalten 21 oder Schnitte 22 entfernt werden.

Somit wird dem Arbeiter diese Operation erleichtert.

Erfindungsgemäß sind die äußere Form und Maße des entstandenen Schalkörper 1 bzw. dessen relevanten Schalkörpermodule 6 so gewählt, dass sie es erlauben eine elektrische Versorgungseinheit 26 entsprechend zu verkabeln und in den, z. B. mit Estrich aufgefüllten Boden passgenau einzulassen. Dies ist auf Fig. 6h sichtbar. Der elektrische Anschluss geschieht hier über die Kabel 12 im Hintergrund. Die anderen zwei Kabelkänale 24 können z. B., anders als in Fig. 6g, hier dann leer gelassen sein.

Der durch den Schalkörper 1 frei gehaltene Raum kann somit ganz oder teilweise benutzt werden um die dort anwesenden Kabel oder Rohre 12 mit den gewünschten Apparaten zu verbinden. Diese Apparate, z. B. eine kasten- oder zylinderförmige elektrische Versorgungseinheit 26 kann somit mit den Kabeln 12 verbunden werden und in die entstandene Nische heruntergelassen werden oder auf bleibende (nicht entfernte) Schalkörpermodule 6 auflegen oder z. B. mit seitlichen Greifsmittel an den Wänden der Nische angebracht und befestigt werden, so dass der Apparat oder z. B. die verkabelte elektrische Versorgungseinheit 26 mit der restlichen Oberfläche des Bodens oder Fußboden fluchtend montiert wird.

Dank der vorliegenden Erfindung hat der Arbeiter auf der Baustelle ein kompaktes Werkzeug, das einfach und preiswert herzustellen ist, weniger Platz einnimmt und vor Ort einfach eingesetzt werden kann, um in kurzer Zeit und ohne Mühe ein maßgeschneiderten Schalkörper 1 herzustellen, der es ihm danach ermöglicht die gewünschte Installation im Boden oder Fußboden praktisch und passgenau einzulassen oder zu versenken. Die Schalkörpermodule 6 können einfach und preiswert hergestellt und ggf. wiederverwendet bzw. recycelt werden. Da die äußere Form und Höhe des Schalkörpers 1 durch die Schalkörpermodule 6 leicht festzulegen sind braucht er nur die benötigten Teile mit sich zu nehmen und nicht ein ganzes Sortiment von schon vorgefertigten Schalkörpern, z. B. die bekannten Metallformen, die er üblicherweise benützt.

Selbstverständlich ist die Erfindung nicht auf die beschriebenen und dargestellten Ausführungsformen begrenzt. Änderungen, z. B. in den Ausführungformen der verschiedenen Bestandteile oder Ersetzungen durch technische Äquivalente sind, soweit sie im Rahmen des beanspruchten Schutzbegehrens der Ansprüche bleiben, jederzeit möglich.

## Patentansprüche

1. Schalkörper zur Herstellung von Böden, insbesondere Böden mit Estrich überdeckten Kabelkänalen, **dadurch gekennzeichnet, dass** der Schalkörper (1) aus einer zum Boden hin horizontal ausgerichteten Grundplatte (2) mit einem äußeren im Wesentlichen viereckigen Umriss (3) sowie aus einem vertikalen Zentrierelement (5) und mindestens einem Schalkörpermodul (6) besteht, wobei die Grundplatte (2) mit einer Ausnehmung (4) zum Anbringen des vertikalen Zentrierelements (5) und von dem oder den den Schalkörper (1) formenden Schalkörpermodul bzw. - modulen (6) gebildet ist, wobei das vertikale Zentrierelement (5) aus mindestens einer Wand (7) besteht, die von der Ausnehmung (4) der Grundplatte (2) und dem Boden weg, vertikal, hoch herausragt und mit einer ausreichenden Dicke versehen ist um, entlang der Wand (7) zwei entgegengesetzte seitliche, vertikale Kontaktflächen (8, 8') oder zwei Paar entgegengesetzte vertikal verlaufende Kontaktkanten (9, 9') zu bilden, die zum Aufstapeln oder Aufstecken des mindestens einen, ringartigen und horizontal ausgerichteten Schalkörpermoduls (6) des zu bildenen Schalkörpers (1) vorgesehen sind, wobei die Form, insbesondere die Form der seitlichen vertikalen Außenflächen (10), dieses ringartigen Schalkörpermoduls (6) oder der aufeinandergestapelten bzw. aufgesteckten ringartigen Schalkörpermodule (6) am Ende die Geometrie der äußeren Form und Höhe (H) des gesamten gewünschten Schalkörpers (1) definiert bzw. definieren, und wobei die Form der Ausnehmung (4) in der Grundplatte (2) und die Form des inneren Bereichs des ringartigen Schalkörpermoduls (6) oder der ringartigen aufeinandergestapelten bzw. aufgesteckten Schalkörpermodule (6) mindestens einen hohlen Durchgang (11) bilden, der es ermöglicht Kabel oder Rohre (12) unter der Grundplatte (2) hindurch nach oben entlang dem inneren Hohlraum (13) bzw. der inneren Hohlräume (13) des ringartigen Schalkörpermoduls (6) bzw. der ringartigen Schalkörpermodule (6) bis zur gewünschten Höhe durchzuziehen.

2. Schalkörper nach Anspruch 1, **dadurch gekennzeichnet, dass** das vertikale Zentrierelement (5) aus mindestens zwei, in der Mitte sich kreuzenden Wänden (7) besteht.

3. Schalkörper nach Anspruch 1 oder 2, **dadurch gekennzeichnet, dass** die Wände (7) aus zwei kreuzförmig ineinander einsteckbaren, im Wesentlichen viereckigen, Platten (7') bestehen, die in der Mitte ihrer Breite dazu entsprechende, parallel zur ihrer Länge, längsläufige Rillenausschnitte (14) bzw. Rillenausnehmungen (15) aufweisen.

4. Schalkörper nach Anspruch 1 bis 3, **dadurch gekennzeichnet, dass** im Bereich des unteren, bodennahen Ende der Wand oder Wände (7), am Rand, Mittel (16) vorgesehen sind zur deren mechanischen Befestigung am Rand der Ausnehmung (4) der Grundplatte (2), insbesondere Mittel (16), wie lokale eckige Aussparungen (17) und Zuspitzungen (18) der Wandenden, die mit der Fläche der dort vorhandenen Dicke in der Ausnehmung (4) zusammenwirken um diese Wände (7) durch die Ausnehmung (4) teilweise hindurchzuführen und dort einzurasten.

5. Schalkörper nach Anspruch 1 bis 4, **dadurch gekennzeichnet, dass** im Bereich des oberen, von der Grundplatte (2) und Boden entfernten Endes der Wand oder Wände (7), mindestens ein Loch (19), insbesondere zwei symmetrisch zu der vertikalen Längsachse der Wände angeordneten Löcher (19) vorhanden ist/sind.

6. Schalkörper nach Anspruch 1 bis 5, **dadurch gekennzeichnet, dass** die zentral angebrachte Ausnehmung (4) in der Grundplatte (2) viereckig oder quadratisch ist, ggf. mit abgeschrägten Ecken.

7. Schalkörper nach Anspruch 6, **dadurch gekennzeichnet, dass** mindestens ein Schalkörpermodul (6) ein, innen hohler, aus geraden Balkenabschnitte (20) konstanter Dicke gebildeter Ring besteht, dessen äußere Form und Maße, die des gewünschten Schalkörpers (1) entsprechen, ggf. ausgenommen der Höhe (h), die bei mehreren Schalkörpermodulen (6) dann nur ein Bruchteil der Gesamthöhe (H) des ganzen Schalkörpers (1) beträgt, und dessen innere Form und Maße, so gewählt sind, dass der innere viereckige, vorzugsweise quadratische, Ring auf das vertikale Zentrierelement (5) justiert herunter gelassen werden kann.

8. Schalkörper nach Anspruch 7, **dadurch gekennzeichnet, dass** mindestens ein Schalkörpermodul (6), vorzugsweise alle aufeinandergestapelten bzw. aufgesteckten Schalkörpermodule (6) eine, vertikal betrachtet, äußere kreisförmige runde, viereckige oder quadratische ringartige Form aufweisen.

9. Schalkörper nach Anspruch 8, **dadurch gekennzeichnet, dass** mindestens ein Schalkörpermodul (6), vorzugsweise alle, einen durchgehenden Spalt (21) oder Schnitt (22) vorweist bzw. vorweisen, der ein Balkenabschnitt (20) des Ringes auf der gesamten Höhe (h) von innen nach außen durchschneidet oder unterbricht.

10. Schalkörper nach Anspruch 6 bis 9, **dadurch gekennzeichnet, dass** er aus einer Aufstapelung bzw. Aufsteckung von 2 bis 15, ggf. identischen, jeweils 2cm bis 10cm hohen ringartigen Schalkörpermodule (6) gebildet ist, die aus einem leicht zerschneidbarem Kunststoffmaterial, vorzugsweise einem expandiertem Kunststoff wie Styropor oder festem Polyurethanschaum bestehen.

11. Verfahren zur Herstellung eines Bodens, insbesondere von Böden mit Estrich überdeckten Kabelkanälen, **dadurch gekennzeichnet, dass** mindestens ein Schalkörper (1) nach Anspruch 1 bis 10 verwendet wird.

12. Verfahren nach Anspruch 11, **dadurch gekennzeichnet, dass** auf dem Boden die Grundplatte (2) des Schalkörpers (1) horizontal angebracht wird,
- das Zentrierelement (5) vertikal auf die Grundplatte (2) angebracht wird,
- ein oder mehrere Schalkörpermodul/module (6) auf das Zentrierelement (5) aufgestapelt oder aufgesteckt werden bis die gewünschte Höhe (H) und Form des zu formenden hohlen Schalkörpers (1) erreicht ist,
- das Restvolumen außenseitig des gebildeten Schalkörpers (1) bis zur gewünschten Höhe aufgefüllt wird, und
- das Zentrierelement (5) und ein Teil oder alle Schalkörpermodule (6) entfernt werden.

13. Verfahren nach Anspruch 11 oder 12, **dadurch gekennzeichnet, dass**:
- zuerst eine Zug- und Abzweigdose (23) auf den Boden zumindest gelegt und am besten befestigt wird, wobei bereits mindestens ein Kabelkanal (24) an die Zug- und Abzweigdose (23) angeschlossen wird,
- auf eine standardmäßig vorhandene Öffnung (25) in der horizontalen oberen Fläche der besagten Dose (23), die horizontale Grundplatte (2) des Schalkörpers (1), zumindest zentriert und rutschfest aufgelegt am besten befestigt wird, wobei die besagte Öffnung (25) von der besagten Grundplatte (2) abgedeckt wird,
- das Zentrierelement (5) vertikal auf die Grundplatte (2) angebracht wird, wobei das Zentrierelement (5) in die kleinere zentrierte Ausnehmung (4) der Grundplatte (2) vertikal passend eingesteckt und verrastet wird,
- die, aus dem oder den Kabelkanälen (24) geführten Kabel oder Rohre (12) von unten durch die Ausnehmung (4) der Grundplatte (2) vertikal entlang des Zentrierelements (5) ggf. hochgezogen werden,
- ein oder mehrere ringartige Schalkörpermoduls/modulen (6), auf das Zentrierelement (5) aufgestapelt oder aufgesteckt werden bis die gewünschte Höhe (H) und Form des zu formenden Schalkörpers (1) erreicht ist,
- das Restvolumen außenseitig des gebildeten Schalkörpers (1) bis zur gewünschten Höhe des Bodens aufgefüllt wird,
- das Zentrierelement (5) entfernt wird und ggf. die bereits vorhandenen Kabeln oder Rohre (12) weiter hochgezogen und zum weiteren Verbau benützt werden, und
- die Schalkörpermodule (6) nach oder beim Entfernen des Zentrierelements (5) ganz oder teilweise entfernt werden.

14. Verfahren nach Anspruch 12 oder 13, **dadurch gekennzeichnet, dass** das oder die ringartig ausgebildete(n) Schalkörpermodul(en) (6) durch Zerbrechen der, in dessen/deren Querschnitt vorhandenen, durchgehende Spalten (21) oder Schnitte (22) entfernt werden.

15. Verfahren nach Anspruch 11 bis 14, **dadurch gekennzeichnet, dass** die äußere Form und Maße des entstandenen Schalkörper (1) bzw. dessen relevanten Schalkörpermodule (6) so gewählt werden, dass sie es erlauben eine elektrische Versorgungseinheit (26) entsprechend zu verkabeln und in den, z. B. mit Estrich, aufgefüllten Boden passgenau einzulassen.

## Claims

1. Formwork body for producing floors, in particular floors with screed-covered cable ducts, **characterized in that** the formwork body (1) comprises a baseplate (2) which is oriented horizontally towards the floor and which has an external substantially quadrangular outline (3), and also comprising a vertical centring element (5) and at least one formwork body module (6), wherein the baseplate (2) is formed with an aperture (4) for mounting the vertical centring element (5) and the formwork module or modules (6) forming the formwork body (1), wherein the vertical centring element (5) comprises at least one wall (7) which projects up vertically away from the aperture (4) in the baseplate (2) and the floor and is provided with a sufficient thickness in order to form, along the wall (7), two opposite lateral, vertical contact surfaces (8, 8') or two pairs of opposite vertically extending contact edges (9, 9') which are provided to stack up or plug on the at least one ring-like and horizontally oriented formwork body module (6) of the formwork body (1) to be formed, wherein the shape, in particular the shape of the lateral vertical outer surfaces (10), of this ring-like formwork body module (6) or of the ring-like formwork body modules (6) which are stacked on one another or plugged on finally defines or define the geometry of the outer shape and height (H) of the entire desired formwork body (1), and wherein the shape of the aperture (4) in the baseplate (2) and the shape of the inner region of the ring-like formwork body module (6) or of the ring-like formwork body modules (6) which are stacked on one another or plugged on form at least one hollow passage (11) which allows cables or tubes (12) to be pulled through under the baseplate (2) and upwards along the inner cavity (13) or the inner cavities (13) of the ring-like formwork body module (6) or of the ring-like formwork body modules (6) to the desired height.

2. Formwork body according to Claim 1, **characterized in that** the vertical centring element (5) comprises at least two walls (7) which intersect in the centre.

3. Formwork body according to Claim 1 or 2, **characterized in that** the walls (7) comprise two substantially quadrangular plates (7') which can be plugged into one another in a cross shape and which, for this purpose, have in the centre of their width corresponding elongate slotted cutouts (14) or slotted apertures (15) which are parallel to their length.

4. Formwork body according to Claims 1 to 3, **characterized in that** means (16) are provided in the region of the lower end of the wall or walls (7) that is close to the floor, at the edge, for mechanically fastening the said wall or walls to the edge of the aperture (4) in the baseplate (2), in particular means (16), such as local angular reliefs (17) and tapers (18) of the wall ends, which interact with the surface of the thickness present in the aperture (4) in order to partially guide these walls (7) through the aperture (4) and latch them in there.

5. Formwork body according to Claims 1 to 4, **characterized in that** at least one hole (19), in particular two holes (19) arranged symmetrically with respect to the longitudinal axis of the walls, is/are present in the region of the upper end of the wall or walls (7) that is removed from the baseplate (2) and floor.

6. Formwork body according to Claims 1 to 5, **characterized in that** the centrally made aperture (4) in the baseplate (2) is quadrangular or square, if appropriate with bevelled corners.

7. Formwork body according to Claim 6, **characterized in that** at least one formwork body module (6) comprises an internally hollow ring which is formed from rectilinear bar portions (20) of constant thickness and of which the external shape and dimensions correspond to those of the desired formwork body (1), where appropriate excluding the height (h) which, given a plurality of formwork body modules (6), is then only a fraction of the total height (H) of the entire formwork body (1), and of which the internal shape and dimensions are chosen such that the inner quadrangular, preferably square, ring can be let down onto the vertical centring element (5) in an adjusted manner.

8. Formwork body according to Claim 7, **characterized in that** at least one formwork body module (6), preferably all formwork body modules (6) which are stacked on one another or plugged on, have, as viewed vertically, an external circular round, quadrangular or square ring-like shape.

9. Formwork body according to Claim 8, **characterized in that** at least one formwork body module (6), preferably all, has or have a continuous gap (21) or cut (22) which cuts through or interrupts a bar portion (20) of the ring from inside to outside over the entire height (h).

10. Formwork body according to Claims 6 to 9, **characterized in that** it is formed from a stack or plugged-on assembly of from 2 to 15 ring-like formwork body modules (6) which are, where appropriate, identical and each 2 cm to 10 cm in height and which consist of a readily cuttable plastic material, preferably an expanded plastic such as Styropor or solid polyurethane foam.

11. Method for producing a floor, in particular floors with screed-covered cable ducts, **characterized in that** at least one formwork body (1) according to Claims 1 to 10 is used.

12. Method according to Claim 11, **characterized in that** the baseplate (2) of the formwork body (1) is mounted horizontally on the floor,
- the centring element (5) is mounted vertically on the baseplate (2),
- one or more formwork body module/modules (6) is/are stacked or plugged onto the centring element (5) until the desired height (H) and shape of the hollow formwork body (1) to be formed is reached,
- the residual volume to the outside of the formed formwork body (1) is filled to the desired height, and
- the centring element (5) and some or all of the formwork body modules (6) are removed.

13. Method according to Claim 11 or 12, **characterized in that**:
- at first a pull and junction box (23) is at least placed on the floor and optimally fastened, wherein already at least one cable duct (24) is connected to the pull and junction box (23),
- the horizontal baseplate (2) of the formwork body (1) is placed at least in a centred and non-slip manner on an opening (25) present as standard in the horizontal upper surface of the said box (23) and optimally fastened, wherein the said opening (25) is covered by the said baseplate (2),
- the centring element (5) is mounted vertically on the baseplate (2), wherein the centring element (5) is plugged in a vertically fitting manner into the relatively small centred aperture (4) in the baseplate (2) and latched,
- the cables or tubes (12) guided out of the cable duct or ducts (24) are, where appropriate, pulled up vertically from below through the aperture (4) in the baseplate (2) and along the centring element (5),
- one or more ring-like formwork body module/modules (6) is/are stacked or plugged onto the centring element (5) until the desired height (H) and shape of the formwork body (1) to be formed is reached,
- the residual volume to the outside of the formed formwork body (1) is filled to the desired height of the floor,
- the centring element (5) is removed and, where appropriate, the already present cables or tubes (12) are pulled up further and used for further installation, and
- the formwork body modules (6) are completely or partially removed after or during the removal of the centring element (5).

14. Method according to Claim 12 or 13, **characterized in that** the ring-like formwork module(s) (6) is/are removed by breaking up the continuous gaps (21) or cuts (22) which are present in the cross section of the formwork module(s).

15. Method according to Claims 11 to 14, **characterized in that** the outer shape and dimensions of the resulting formwork body (1) or its relevant formwork body modules (6) are chosen such that they allow an electrical supply unit (26) to be correspondingly wired and to be embedded in an accurately fitting manner into the floor which is filled, for example, with screed.

## Revendications

1. Bâti de coffrage pour la fabrication de sols, en particulier de sols avec des caniveaux de câbles recouverts d'une chape, **caractérisé en ce que** le bâti de coffrage (1) est constitué d'une plaque de base (2) orientée horizontalement en direction du sol et ayant un contour extérieur (3) sensiblement quadrangulaire, ainsi que d'un élément vertical de centrage (5) et d'au moins un module (6) de bâti de coffrage, sachant que la plaque de base (2) est formée avec un évidement (4) pour la mise en place de l'élément vertical (5) de centrage du ou des modules (6) de bâti de coffrage qui donnent sa forme au bâti de coffrage (1), sachant que l'élément vertical de centrage (5) est constitué d'au moins une paroi (7) qui se dresse verticalement vers le haut en s'éloignant de l'évidement (4) de la plaque de base (2) et du sol, et est doté d'une épaisseur suffisante pour former, le long de la paroi (7), deux faces de contact verticales latérales opposées (8, 8') ou deux paires de bords de contact opposés (9, 9') s'étendant verticalement, qui sont prévues pour l'empilage ou l'emboîtement du module au moins unique (6) de bâti de coffrage, du genre anneau et orienté horizontalement, du bâti de coffrage (1) à former, sachant que la forme, en particulier la forme des faces extérieures verticales latérales (10), de ce module du genre anneau (6) de bâti de coffrage ou des modules du genre anneaux empilés ou emboîtés (6) de bâti de coffrage définit ou définissant finalement la géométrie de la hauteur (H) et de la forme extérieure de l'ensemble du bâti de coffrage (1) souhaité, et sachant que la forme de l'évidement (4) dans la plaque de base (2) et la forme de la région intérieure du module du genre anneau (6) de bâti de coffrage ou des modules du genre anneaux empilés ou emboîtés (6) de bâti de coffrage forment au moins un passage creux (11) qui permet de tirer des câbles ou des tubes (12), d'en dessous de la plaque de base (2) à travers celle-ci, vers le haut le long de l'espace intérieur creux (13) ou des espaces intérieurs creux (13) du module du genre anneau (6) de bâti de coffrage ou des modules du genre anneaux (6) de bâti de coffrage, jusqu'à la hauteur souhaitée.

2. Bâti de coffrage selon la revendication 1, **caractérisé en ce que** l'élément vertical de centrage (5) est constitué d'au moins deux parois (7) qui se croisent au milieu.

3. Bâti de coffrage selon la revendication 1 ou 2, **caractérisé en ce que** les parois (7) sont constituées de deux parois (7') sensiblement quadrangulaires pouvant être emboîtées en croix l'une dans l'autre, qui présentent au milieu de leur largeur des découpures formant rainures (14) ou des évidements formant rainures (15) correspondants, s'étendant longitudinalement parallèlement à leur longueur.

4. Bâti de coffrage selon l'une des revendications 1 à 3, **caractérisé en ce qu'**il est prévu dans la région de l'extrémité inférieure, proche du sol, de la paroi ou des parois (7), sur le bord, des moyens (16) pour leur fixation mécanique sur le bord de l'évidement (4) de la plaque de base (2), en particulier des moyens (16), tels que des évidements angulaires locaux (17) et des terminaisons en pointe (18) des extrémités des parois, qui coopèrent avec la surface de l'épaisseur présente à cet endroit dans l'évidement (4) pour faire passer partiellement ces parois (7) à travers l'évidement (4) et les y enclencher.

5. Bâti de coffrage selon l'une des revendications 1 à 4, **caractérisé en ce qu'**au moins un trou (19), en particulier deux trous (19) disposés symétriquement par rapport à l'axe longitudinal vertical des parois, est/sont présent(s) dans la région de l'extrémité supérieure, éloignée de la plaque de base (2) et du sol, de la paroi ou des parois (7).

6. Bâti de coffrage selon l'une des revendications 1 à 5, **caractérisé en ce que** l'évidement (4) placé centralement dans la plaque de base (2) est rectangulaire ou carré, éventuellement avec des coins chanfreinés.

7. Bâti de coffrage selon la revendication 6, **caractérisé en ce qu'**au moins un module (6) de bâti de coffrage consiste en un anneau intérieurement creux, formé de tronçons de poutrelle (20) d'épaisseur constante, dont la forme extérieure et les dimensions correspondent à celles du bâti de coffrage (1) souhaité, à l'exception le cas échéant de la hauteur (h) qui, en présence de plusieurs modules (6) de bâti de coffrage, n'est alors égale qu'à une fraction de la hauteur totale (H) de l'ensemble du bâti de coffrage (1), et dont la forme intérieure et les dimensions sont choisies de telle sorte que la anneau intérieure quadrangulaire, de préférence carrée, peut être descendue d'une manière ajustée à l'élément vertical de centrage (5).

8. Bâti de coffrage selon la revendication 7, **caractérisé en ce qu'**au moins un module (6) de bâti de coffrage, de préférence tous les modules empilés ou emboîtés (6) de bâti de coffrage, présentent une forme extérieure du genre anneau circulaire, arrondie, rectangulaire ou carrée, considéré verticalement.

9. Bâti de coffrage selon la revendication 8, **caractérisé en ce qu'**au moins un module (6) de bâti de coffrage, de préférence tous, présente ou présentent une entaille (22) ou fente (21) ininterrompue, qui interrompt ou coupe de l'intérieur vers l'extérieur un tronçon de poutrelle (20) de l'anneau sur toute la hauteur (h).

10. Bâti de coffrage selon l'une des revendications 6 à 9, **caractérisé en ce qu'**il est formé d'un empilement ou emboîtement de 2 à 15 modules du genre anneaux (6) de bâti de coffrage d'une hauteur respective de 2 cm à 10 cm, éventuellement identiques, qui sont constitués d'une manière plastique facile à couper, de préférence une matière plastique expansée telle que du polystyrène expansé ou de la mousse solide de polyuréthane.

11. Procédé de fabrication d'un sol, en particulier de sols avec des caniveaux de câbles recouverts d'une chape, **caractérisé en ce qu'**on utilise au moins un bâti de coffrage (1) selon l'une des revendications 1 à 10.

12. Procédé selon la revendication 11, **caractérisé en ce que**
- la plaque de base (2) du bâti de coffrage (1) est installée horizontalement sur le sol,
- l'élément de centrage (5) est installé verticalement sur la plaque de base (2),
- un ou plusieurs module/modules (6) de bâti de coffrage sont empilés ou emboîtés sur l'élément de centrage (5) jusqu'à l'obtention de la hauteur souhaitée (H) et de la forme du bâti de coffrage creux (1) à former,
- le volume restant à l'extérieur du bâti de coffrage formé (1) est rempli jusqu'à la hauteur souhaitée, et
- l'élément de centrage (5) et une partie ou la totalité des modules (6) de bâti de coffrage sont enlevés.

13. Procédé selon la revendication 11 ou 12, **caractérisé en ce que**
- tout d'abord, une boîte (23) de tirage et de dérivation est au moins posée et au mieux fixée sur le sol, sachant qu'au moins un caniveau de câbles (24) est déjà raccordé à la boîte (23) de tirage et de dérivation,
- sur une ouverture (25) présente de manière standard dans la face supérieure horizontale de ladite boîte (23), la plaque de base horizontale (2) du bâti de coffrage (1) est au moins posée de manière centrée et résistante au glissement et au mieux fixée, sachant que ladite ouverture (25) est recouverte par ladite plaque de base (2),
- l'élément de centrage (5) est installé verticalement sur la plaque de base (2), sachant que l'élément de centrage (5) est emboîté et enclenché en ajustement vertical dans l'évidement centré plus petit (4) de la plaque de base (2),
- les câbles ou tubes (12), sortis du ou des caniveaux de câbles (24), sont le cas échéant tirés verticalement de bas en haut par l'évidement (4) de la plaque de base (2), le long de l'élément de centrage (5),
- un ou plusieurs module/modules du genre anneau(x) (6) de bâti de coffrage sont empilés ou emboîtés sur l'élément de centrage (5) jusqu'à l'obtention de la hauteur souhaitée (H) et de la forme du bâti de coffrage (1) à former,
- le volume restant à l'extérieur du bâti de coffrage formé (1) est rempli jusqu'à la hauteur souhaitée du sol,
- l'élément de centrage (5) est enlevé et, le cas échéant, les câbles ou tubes (12) déjà présents sont davantage tirés vers le haut et utilisés pour la suite de la pose, et
- les modules (6) de bâti de coffrage sont enlevés en totalité ou en partie après ou lors de l'enlèvement de l'élément de centrage (5).

14. Procédé selon la revendication 12 ou 13, **caractérisé en ce que** le ou les module(s) (6) de bâti de coffrage configuré(s) du genre anneau(x) sont enlevés en brisant les entailles (22) ou fentes (21) ininterrompues présentes dans sa/leur section.

15. Procédé selon l'une des revendications 11 à 14, **caractérisé en ce que** la forme extérieure et les dimensions du bâti de coffrage obtenu (1) ou de ses modules appropriés (6) de bâti de coffrage sont choisies de telle sorte qu'elles permettent de câbler adéquatement une unité d'alimentation électrique (26) et de l'encastrer en ajustement précis dans le sol rempli par exemple avec une chape.
